## Europäisches Patentamt

## European Patent Office

## Office européen des brevets

(19)

(11) Veröffentlichungsnummer: **0 164 005**
**B1**

(12)

# EUROPÄISCHE PATENTSCHRIFT

(45) Veröffentlichungstag der Patentschrift:
**12.08.87**

(51) Int. Cl.⁴: **H 02 J 13/00**

(21) Anmeldenummer: **85106106.9**

(22) Anmeldetag: **17.05.85**

(54) **Kopplungsstufe für die Ankopplung eines signalverarbeitenden Gerätes an eine Ubertragungsleitung.**

(30) Priorität: **30.05.84 DE 3420268**

(43) Veröffentlichungstag der Anmeldung:
**11.12.85 Patentblatt 85/50**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**EP-A-0 093 882**

(73) Patentinhaber: **Siemens Aktiengesellschaft Berlin und München, Wittelsbacherplatz 2, D-8000 München 2 (DE)**

(72) Erfinder: **Frühauf, Waldemar, Dr., Clausewitzstrasse 34, D-8500 Nürnberg (DE)**

EP 0 164 005 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft eine Kopplungsstufe für die Ankopplung eines signalverarbeitenden Gerätes an eine Übertragungsleitung mit einer an eine Versorgungsspannungsquelle angeschlossenen Reihenschaltung eines ersten Transistors und einer gesteuerten Stromquelle, wobei der Verbindungspunkt von erstem Transistor und Stromquelle mit der Übertragungsleitung verbunden ist, wobei der erste Transistor durch die Ausgangssignale des Gerätes angesteuert wird und wobei die Stromquelle während jedes Sendevorganges des Gerätes eingeschaltet wird.

Eine derartige Kopplungsstufe ist beispielsweise aus der EP-A 0 093 882 bekannt. Bei Übertragungssystemen tritt häufig das Problem auf, daß in Anpassung an einen niederohmigen Übertragungsweg niederohmig gesendet werden muß, während die Empfänger hochohmig sein sollen, um den Übertragungsweg möglichst wenig zu belasten. Dieses Problem tritt insbesondere dann auf, wenn das in einem Gebäude installierte elektrische Netz als Übertragungsweg für Informationen genutzt werden soll. Bei Hausleitsystemen zur selektiven Fernsteuerung von in Gebäuden untergebrachten elektrischen Geräten werden dabei über das elektrische Netz Adreß- bzw. Befehlstelegramme übermittelt, die codierte Informationen in Form von als Sinuswellenzügen ausgebildeten trägerfrequenten Impulsen und Impulslücken enthalten. Das installierte elektrische Netz ist wegen des Betriebs einer Vielzahl von elektrischen Geräten mit starken Impedanzschwankungen behaftet. Um Einbrüche des Spannungspegels der trägerfrequenten Sinuswellenzüge durch solche Impedanzschwankungen weitgehend auszuschließen, ist entsprechend der genannten EP-A-0 093 882(=DE-OS 32 15 063) eine Einkopplungsstufe vorgesehen, die während der Dauer eines Befehlstelegramms eine niederohmige Einkopplung vermittelt, ansonsten aber hochohmig schaltbar ist.

Aufgabe der Erfindung ist es, eine Kopplungsstufe der eingangs genannten Art so auszugestalten, daß sie sowohl für den Sendebetrieb als auch für den Empfangsbetrieb geeignet ist, wobei die Zahl der verwendeten Bauteile möglichst gering gehalten werden soll. Ferner soll die Kopplungsstufe möglichst wenig Anschlüsse an das signalverarbeitende Gerät benötigen.

Diese Aufgabe wird erfindungsgemäß dadurch gelöst, daß ein Signalanschluß des Gerätes, der als Ein- und Ausgang wirkt, über einen ersten Widerstand mit der Basis des ersten Transistors verbunden ist, daß ein Steuerausgang des Gerätes, an dem ein die Übertragungsrichtung festlegendes Signal ansteht, über einen zweiten Widerstand mit der Basis des ersten Transistors verbunden ist und daß die Übertragungsleitung über einen dritten Widerstand mit dem Signalanschluß des Gerätes verbunden ist.

Die erfindungsgemäße Kopplungsstufe ist also sowohl beim Senden als auch beim Empfangen von Signalen verwendbar, wobei der Abschlußwiderstand beim Senden niederohmig und beim Empfangen hochohmig ist. Durch die Verwendung eines einzigen Signalanschlusses, der beim Senden als Ausgang und beim Empfang als Eingang wirkt, sind nur zwei Anschlüsse zwischen dem signalverarbeitenden Gerät und der Kopplungsstufe erforderlich. Dies ist insbesondere dann von Bedeutung, wenn für das signalverarbeitende Gerät ein hochintegrierter Schaltkreis verwendet wird, da die Zahl der Anschlüsse bei solchen Schaltkreisen im Verhältnis zur Vielzahl der auf einem Schaltkreis realisierten Funktionen stets knapp ist.

Der dritte Widerstand wird vorteilhafterweise zwischen dem Verbindungspunkt des ersten Transistors mit der Stromquelle und der Basis des ersten Transistors angeordnet. Damit ist das Signal im Empfangsfall über den dritten und den ersten Widerstand direkt dem Signalanschluß des Gerätes zugeführt.

Die Stromquelle kann aus der Reihenschaltung eines zweiten Transistors und eines Widerstandes bestehen, wobei der zweite Transistor dieselbe Leitrichtung wie der erste Transistor aufweist und die Basis des zweiten Transistors mit der Anzapfung eines Spannungsteilers mit zwei Widerständen verbunden ist, von denen ein Widerstand an den Steuerausgang des Gerätes angeschlossen ist. Damit wird einerseits der Eingangswiderstand der Schaltung im Empfangsfall sehr hoch, während andererseits im Sendefall die Stromquelle einen hohen Strom führen kann.

In einer alternativen Ausführungsform kann die Stromquelle aus der Reihenschaltung eines zweiten Transistors und eines vierten Widerstandes bestehen, wobei dieser Reihenschaltung ein sechster Widerstand parallelgeschaltet ist und die Basis des zweiten Transistors mit dem Signalanschluß des Gerätes verbunden ist. Dabei wird die Schaltung zwar im Empfangsfall nicht mehr beliebig hochohmig. Wenn der Kopplungsstufe jedoch ein Filter, beispielsweise ein Serienschwingkreis nachgeschaltet ist, so weist dieser im Empfangsbetrieb aufgrund des kleineren Eingangswiderstands eine höhere Güte auf.

In einer besonders einfachen Ausführungsform kann die Stromquelle aus der Reihenschaltung einer Diode mit einem vierten Widerstand bestehen, wobei dieser Reihenschaltung ein sechster Widerstand parallelgeschaltet ist. Die Diode kann hohe Ströme gegen das Bezugspotential übernehmen und kommt stets zur Wirkung, wenn das Steuersignal einen "Eins"-Pegel hat.

In einer vorteilhaften Ausführungsform ist der erste Transistor über einen sechsten Widerstand mit der Versorgungsspannung verbunden, wobei der Verbindungspunkt des Widerstandes mit dem ersten Transistor über einen Kondensator mit der Basis des zweiten Transistors verbunden ist. Über den Kondensator wird damit eine lastabhängige Steuerung der Stromquelle erreicht, so daß der Stromverbrauch verringert wird.

Dem zweiten Widerstand kann ein fünfter Widerstand in Reihe geschaltet sein, über den der zweite Widerstand mit der Basis des ersten Transistors verbunden ist, wobei der Verbindungspunkt dieser beiden Widerstände über einen Kondensator an ein Bezugspotential angeschlossen ist. Dieser Kondensator wirkt als Glättungskondensator zum weichen Einschalten der Stromquelle, so daß Knackstörungen vermieden werden.

Bei einer besonders vorteilhaften Ausführungsform ist dem zweiten Widerstand ein auf die Frequenz der zu übertragenden Signale abgestimmter Parallelschwingkreis in Reihe geschaltet, über den der zweite Widerstand mit der Basis des ersten Transistors verbunden ist, wobei der Verbindungspunkt von zweitem Widerstand und Parallelschwingkreis über einen zweiten Kondensator mit großer Kapazität an ein Bezugspotential angeschlossen ist. Der zweite Kondensator muß dabei eine so große Kapazität haben, daß er für die Frequenz der übertragenen Signale nahezu einen Kurzschluß darstellt. Der Parallelschwingkreis wirkt dabei sowohl im Empfangsbetrieb als auch im Sendebetrieb als Filter.

Die Vorteile der erfindungsgemäßen Anordnung kommen auch dann zum Tragen, wenn anstelle der Übertragungsleitung ein Gerät angeschlossen ist, das sowohl als Signalsender als auch als Signalempfänger wirkt. Die Kopplungsstufe ist dann beim Empfangsbetrieb des angeschlossenen Gerätes in Anpassung an eine niedrige Impedanz des Gerätes niederohmig, während sie beim Sendebetrieb hochohmig ist und damit die erzeugten Signale nur gering belastet.

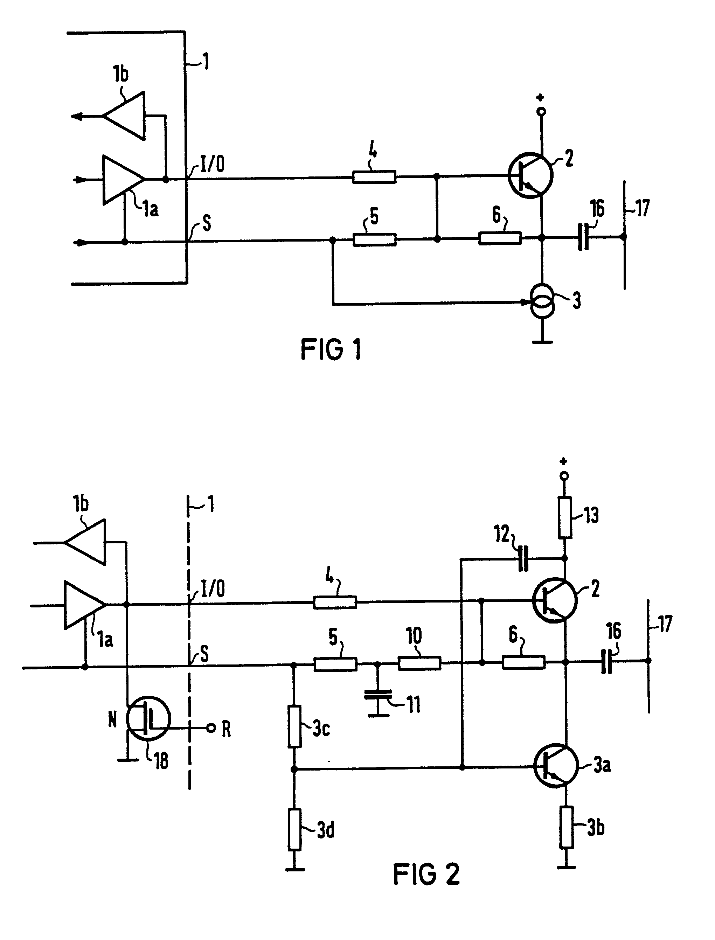

Ausführungsbeispiele der Erfindung werden nachfolgend anhand der Figuren 1 bis 5 näher erläutert:

Fig. 1 zeigt ein Prinzipschaltbild der erfindungsgemäßen Anordnung. Das signalverarbeitende Gerät 1 ist in diesem Fall vorzugsweise als hochintegrierter Schaltkreis ausgeführt, der z.B. einen Modulator und einen Demodulator enthält. Ein Sendeverstärker 1a ist ausgangsseitig und ein Empfangsverstärker 1b eingangsseitig mit einem Signalanschluß I/O verbunden, der zugleich als Ein- und Ausgang dient. An einem Steueranschluß S des hochintegrierten Schaltkreises 1 steht ein "Eins"-Signal an, wenn die Schaltung im Sendebetrieb arbeitet. Mit einer nachfolgend erläuterten Kopplungsstufe wird das Gerät 1 an eine Übertragungsleitung 17 angekoppelt, die beispielsweise eine Netzleitung sein kann. Die Kopplungsstufe enthält die Reihenschaltung eines NPN-Transistors 2 und einer Stromquelle 3, wobei der Kollektor des Transistors 2 an die positive Versorgungsspannung und die Stromquelle 3 am Bezugspotential angeschlossen sind.

Der Verbindungspunkt von Transistor 2 und Stromquelle 3 ist über einen Kondensator 16 mit der Übertragungsleitung 17 verbunden. Die Basis des Transistors 2 wird vom Signalanschluß I/O des Gerätes 1 über einen Widerstand 4 angesteuert. Die steuerbare Stromquelle 3 wird direkt über den Steueranschluß S des Gerätes 1 angesteuert.

Ferner ist der Signalanschluß S des Gerätes 1 über einen Widerstand 5 mit der Basis des Transistors 2 verbunden und zwischen Basis und Emitter des Transistors 2 ein Widerstand 6 geschaltet. Im Empfangsbetrieb steht am Steuerausgang S des Gerätes 1 ein "Null"-Signal an, so daß sowohl die Stromquelle 3 als auch der Transistor 2 gesperrt sind. Der Eingangswiderstand der Kopplungsstufe ist daher hochohmig. Auf der Übertragungsleitung 17 vorhandene Signale werden über den Kondensator 16, den Widerstand 6 und den Widerstand 4 dem Signalanschluß I/O des Gerätes 1 zugeführt und in diesem verarbeitet.

Schaltet nun das Gerät 1 auf Sendebetrieb, so steht am Steueranschluß S ein "Eins"-Signal an, das die Stromquelle 3 einschaltet und über den Widerstand 5 einen Arbeitspunkt für den Transistor 2 vorgibt. Die am Signalanschluß I/O anstehenden Sendesignale steuern über den Widerstand 4 aufgrund der vom Signalanschluß gelieferten Vorspannung den Transistor 2, so daß die gesendeten Signale niederohmig auf die Übertragungsleitung 17 eingekoppelt werden. Selbst im Falle eines mit hohen Impedanzschwankungen behafteten Netzes bleibt daher der Spannungspegel des die codierte Information tragenden Signals weitgehend unbeeinträchtigt. Dagegen werden durch die im Empfangszustand hochohmigen Kopplungsstufen die auf dem Übertragungsweg 17 vorhandenen Signale nahezu nicht gedämpft.

Ein detailliertes Ausführungsbeispiel ist in Fig. 2 dargestellt. Dabei ist die steuerbare Stromquelle 3 mit der Reihenschaltung eines NPN-Transistors 3a und eines seinem Emitter nachgeschalteten Widerstands 3b realisiert. Der Transistors 3a weist denselben Leitfähigkeitstyp und dieselbe Leitrichtung auf wie der Transistor 2. Die Basis des Transistors 3a ist an die Anzapfung eines aus den Widerständen 3c und 3d bestehenden Spannungsteilers angeschlossen. Dieser Spannungsteiler ist einerseits an den Steueranschluß S des Gerätes 1 und andererseits an das Bezugspotential angeschlossen. Der Transistor 3a übernimmt somit einen durch die Widerstände 3b bis 3d sowie den Spannungspegel des Signals am Steueranschluß S festgelegten Strom, wenn am Steueranschluß S ein "Eins"-Signal ansteht. Die Basis des Transistors 3a ist aber außerdem über einen Kondensator 12 mit dem Kollektor des Transistors 2 verbunden. Dieser Kollektor ist über einen Widerstand 13 an den Pluspol der Versorgungsspannung angeschlossen. Diese Schaltung hat den Vorteil, daß der Ruhestrom des Transistors 3a gering gehalten werden kann und bei Bedarf trotzdem hohe Lastströme auch gegen das Bezugspotential ermöglicht werden. Über den Kondensator 12 wird der Transistor 3a nämlich lastabhängig gesteuert.

Zusätzlich zur Schaltung nach Fig. 1 enthält die Schaltung nach Fig. 2 außerdem einen Widerstand 10, der in Serie zum Widerstand 5 geschaltet ist und diesen mit der Basis des Transistors 2 und dem Widerstand 6 verbindet. Der Verbindungspunkt der Widerstände 5 und 10 ist über einen Kondensator 11 an Masse gelegt. Mit dem dadurch aus dem Widerstand 5 und dem Kondensator 11 gebildeten RC-Glied wird erreicht, daß die Flanken des Signals am Signalanschluß S abgeflacht und damit Knackstörungen vermieden werden. Bei der Schaltung nach Fig. 2 ist der Signalanschluß I/O des Gerätes 1 innerhalb des Gerätes über einen Feldeffekttransistor 18 mit Bezugspotential verbunden. Die Basis des Feldeffekttransistors 18 ist an einen Regelungsanschluß R geführt. Über diesen Regelungsanschluß kann somit die Amplitude am Signalanschluß I/O des Gerätes 1 geregelt werden. Diese Anordnung läßt sich besonders vorteilhaft bei integrierten CMOS-Schaltkreisen realisieren.

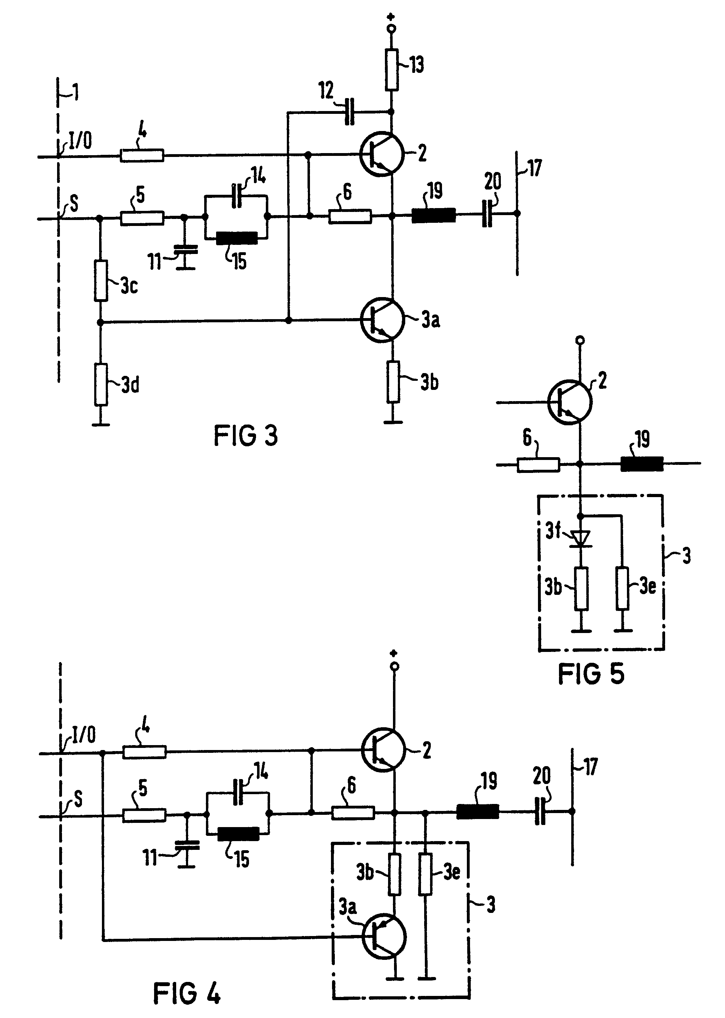

Ein weiteres Ausführungsbeispiel der Erfindung ist in Fig. 3 dargestellt. Dabei ist der Widerstand 10 nach Fig. 2 durch einen Parallelschwingkreis mit einem Kondensator 14 und einer Induktivität 15 ersetzt. Außerdem ist die Übertragungsleitung 17 über einen Serienschwingkreis mit einer Induktivität 19 und einem Kondensator 20 an den Verbindungspunkt der Transistoren 3 und 3a angeschlossen. Bei dieser Schaltung muß die Kapazität des Kondensators 11 so groß sein, daß dieser im Frequenzbereich der Signale nahezu wie ein Kurzschluß wirkt. Der Parallelschwingkreis 14, 15 zusammen mit dem Kondensator 11 bewirkt dann sowohl auf dem Empfangsweg als auch auf dem Sendeweg eine starke Dämpfung für alle Frequenzen, die nicht der Sollfrequenz entsprechen. Diese Frequenzen werden zusätzlich durch den Serienschwingkreis 19, 20 gedämpft, wobei dieser ebenfalls sowohl in Sende- als auch in Empfangsrichtung wirksam ist. Die beiden Schwingkreise stellen daher zwei Filter dar, die in beiden Signalrichtungen genutzt werden. Damit ist ein Abgleich nur in einer Betriebsart, und zwar am einfachsten beim Senden, notwendig.

In den Fig. 4 und 5 sind zwei weitere Ausführungsmöglichkeiten für die Stromquelle 3 dargestellt. Beim Ausführungsbeispiel nach Fig. 4 wird anstelle eines NPN-Transistors ein PNP-Transistor 3a eingesetzt, dessen Emitter über einen Widerstand 3b mit dem Emitter des Transistors 2 und dessen Kollektor mit Bezugspotential verbunden ist. Ferner ist der Emitter des Transistors 2 über einen weiteren Widerstand 3e ebenfalls mit Bezugspotential verbunden. In diesem Fall wird die Basis des Transistors 3a nicht über den Steueranschluß gesteuert, sondern über den Signalanschluß I/0. Damit wird bei negativen Signalen am Signalanschluß I/O der Transistor 3a eingeschaltet, so daß die Schaltung in der Lage ist, hohe negative Ströme gegen Bezugspotential zu liefern.

Da der Transistor 3a also nur bei Bedarf eingeschaltet wird, ist diese Schaltung stromsparend. Positive Ströme werden wie bei den anderen Schaltungen über den Transistor 2 geliefert. Wegen des parallelgeschalteten Widerstands 3e wird die Schaltung im Empfangsbetrieb nicht mehr beliebig hochohmig. Dafür erhält jedoch der Serienschwingkreis 19, 20 aufgrund des niederohmigeren Eingangs auch im Empfangsbetrieb eine höhere Güte. Ferner wird mit dem Widerstand 3e verhindert, daß kapazitive Spannungseinkopplungen über den Kondensator 20 im Empfangsbetrieb der Kopplungsstufe, also bei hochohmigem Eingang, zu unzulässigen Eingangsspannungen führen. Das ist besonders wichtig, wenn die Übertragungsleitung 17 ein Stromnetz ist.

Die Schaltung nach Fig. 5 unterscheidet sich von der Schaltung nach Fig. 4 dadurch, daß der Transistor 3a durch eine Diode 3f ersetzt ist, deren Anode mit dem Emitter des Transistors 2 verbunden ist. Über diese Diode 3f und den in Serie geschalteten Widerstand 3b können damit hohe Ströme gegen das Bezugspotential übernommen werden. Die Diode 3f ist immer leitend, solange am Signalausgang S ein "Eins"-Signal ansteht. Wie bei der Schaltung nach Fig. 4 wird durch den parallel geschalteten Widerstand 3e die Güte des Serienschwingkreises 19, 20 verbessert.

Bei allen dargestellten Schaltungen ist darauf hinzuweisen, daß direkt mit dem Gerät 1 verbundene Widerstände nicht diskret vorhanden sein müssen, sondern u.U. durch den Innenwiderstand der entsprechenden Ausgänge des Gerätes 1 gebildet werden können.

Mit der beschriebenen Kopplungsstufe können anstelle der Übertragungsleitung auch andere Geräte, die sowohl als Sender als auch als Empfänger wirken, an das signalverarbeitende Gerät angekoppelt werden. In diesen Fällen wird es nämlich vielfach zweckmäßig sein, das angeschlossene Gerät niederohmig zu speisen, wenn dieses als Empfänger wirkt. Umgekehrt soll jedoch das angeschlossene Gerät als Sender möglichst wenig belastet, d.h. hochohmig angeschlossen werden. Genau dies wird jedoch mit der beschriebenen Kopplungsstufe erreicht. Als Beispiel für ein Gerät, das sowohl als Sender als auch als Geber wirken kann, sei ein Lautsprecher genannt, der auch als Mikrofon wirkt.

**Patentansprüche**

1. Kopplungsstufe für die Ankopplung eines signalverarbeitenden Gerätes (1) an eine Übertragungsleitung (17) mit einer an eine Versorgungsspannungsquelle angeschlossenen Reihenschaltung eines ersten Transistors (2) und einer gesteuerten Stromquelle (3), wobei der Verbindungspunkt von erstem Transistor (2) und Stromquelle (3) mit der Übertragungsleitung (17) verbunden ist, wobei der erste Transistor (2) durch die Ausgangssignale des Gerätes (1) angesteuert wird und wobei die Stromquelle (3) während jedes Sendevorgangs des Gerätes (1) eingeschaltet wird, dadurch gekennzeichnet, daß ein Signalanschluß (I/0) des Gerätes, der als Ein- und Ausgang wirkt, über einen ersten Widerstand (4) mit der Basis des ersten Transistors (2) verbunden ist, daß ein Steuerausgang (S) des Gerätes (1), an dem ein die Übertragungsrichtung festlegendes Signal (An) ansteht, über einen zweiten Widerstand (5) mit der Basis des ersten Transistors (2) verbunden ist und daß die Übertragungsleitung (17) über einen dritten Widerstand (6) mit dem Signalanschluß (I/0) des Gerätes (1) verbunden ist.

2. Kopplungsstufe nach Anspruch 1, dadurch gekennzeichnet, daß der dritte Widerstand (6) zwischen dem Verbindungspunkt des ersten Transistors (2) mit der Stromquelle (3) und der Basis des ersten Transistors (2) angeordnet ist.

3. Kopplungsstufe nach Anspruch 1 oder 2, dadurch gekennzeichnet, daß der Steuerausgang (S) des Gerätes (1) mit einem Steuereingang der Stromquelle (3) verbunden ist.

4. Kopplungsstufe nach Anspruch 3, dadurch gekennzeichnet, daß die Stromquelle (3) aus der Reihenschaltung eines zweiten Transistors (3a) und eines vierten Widerstands (3b) besteht, daß der zweite Transistor (3a) dieselbe Leitrichtung wie der ersten Transistor (2) aufweist und daß die Basis des zweiten Transistors (3a) mit der Anzapfung eines Spannungsteilers mit zwei Widerständen (3c, 3d) verbunden ist, von denen ein Widerstand (3c) an den Steuerausgang (S) des Gerätes (1) angeschlossen ist.

5. Kopplungsstufe nach Anspruch 1 oder 2, dadurch gekennzeichnet, daß die Stromquelle (3) aus der Reihenschaltung eines zweiten Transistors (3a) und eines vierten Widerstands (3b) besteht, wobei dieser Reihenschaltung ein sechster Widerstand (3e) parallel geschaltet ist und die Basis des zweiten Transistors (3a) mit dem Signalanschluß des Gerätes (1) verbunden ist.

6. Kopplungsstufe nach Anspruch 1 oder 2, dadurch gekennzeichnet, daß die Stromquelle (3) aus der Reihenschaltung einer Diode (3f) mit einem vierten Widerstand (3b) besteht, wobei dieser Reihenschaltung ein sechster Widerstand (3e) parallel geschaltet ist.

7. Kopplungsstufe nach Anspruch 3 oder 4, dadurch gekennzeichnet, daß der erste Transistor (2) über einen siebenten Widerstand (13) mit der Versorgungsspannung verbunden ist und daß der Verbindungspunkt des Widerstands (13) mit dem ersten Transistor (2) über einen ersten Kondensator (12) mit der Basis des zweiten Transistors (3a) verbunden ist.

8. Kopplungsstufe nach einem der Ansprüche 1 bis 6, dadurch gekennzeichnet, daß dem zweiten Widerstand (5) ein fünfter Widerstand (10) in Reihe geschaltet ist, über den der zweite Widerstand (5) mit der Basis des ersten Transistors (2) verbunden ist und daß der Verbindungspunkt dieser beiden Widerstände (5, 10) über einen zweiten Kondensator (11) an ein Bezugspotential angeschlossen ist.

9. Kopplungsstufe nach einem der Ansprüche 1 bis 8, dadurch gekennzeichnet, daß dem zweiten Widerstand (5) ein auf die Frequenz der zu übertragenden Signale abgestimmter Parallelschwingkreis (14, 15) in Reihe geschaltet ist, über den der zweite Widerstand (5) mit der Basis des ersten Transistors (2) verbunden ist und daß der Verbindungspunkt von zweitem Widerstand (5) und Parallelschwingkreis (14, 15) über einen zweiten Kondensator (11) mit großer Kapazität an ein Bezugspotential angeschlossen ist.

10. Kopplungsstufe nach einem der Ansprüche 1 bis 9, dadurch gekennzeichnet, daß anstelle der Übertragungsleitung ein Gerät angeschlossen ist, das sowohl als Signalsender als auch als Signalempfänger wirkt.

**Claims**

1. A coupling stage for coupling a signal processing device (1) to a transmission line (17), with a series arrangement of a first transistor (2) and a control current source (3), connected to a supply voltage source, where the connection point of the first transistor (2) and the current source (3) is connected to the transmission line (17) where the first transistor (2) is driven by the output signals of the device (1), and where the current source (3) is switched on during each transmitting operation of the device (1), characterised in that a signal terminal (I/0) of the device, which serves as input and output, is connected via a first resistor (4) to the base of the first transistor (2), that a control output (S) of the device (1), at which a signal (An) occurs, which determines the transmission direction, is connected via a second resistor (5) to the base of the first transistor (2), and that the transmission line (17) is connected via a third resistor (6) to the signal terminal (I/0) of the device (1).

2. A coupling stage as claimed in claim 1, characterised in that the third resistor (6) is arranged between the connection point of the first transistor (2) to the current source (3) and the base of the first transistor (2).

3. A coupling stage as claimed in claim 1 or 2, characterised in that the control output (S) of the device (1) is connected to a control input of the current source (3).

4. A coupling stage as claimed in claim 3, characterised in that the current source (3) comprises the series arrangement of a second transistor (3a) and fourth resistor (3b), that the second transistor (3a) has the same conducting direction as the first transistor (2), and that the base of the second transistor (3a) is connected to the tapping of a voltage divider with two resistors (3c,3d) of which one resistor (3c) is connected to the control output (S) of the device (1).

5. A coupling stage as claimed in claim 1 or 2, characterised in that the current source (3) comprises the series arrangement of a second transistor (3a) and a fourth resistor (3b), where this series arrangement is connected in parallel with a sixth resistor (3e) and the base of the second transistor (3a) is connected to the signal terminal of the device (1).

6. A coupling stage as claimed in claim 1 or 2, characterised in that the current source (3) comprises the series arrangement of a diode (3f) and a fourth resistor (3b), where this series arrangement is connected in parallel with a sixth resistor (3e).

7. A coupling stage as claimed in claim 3 or 4, characterised in that the first transistor (2) is connected via a seventh resistor (13) to the supply voltage, and that the connection point of the resistor (13) to the first transistor (2) is connected via a first capacitor (12) to the base of the second transistor (3a).

8. A coupling stage as claimed in one of the claims 1 to 6, characterised in that the second resistor (5) is connected in series with a fifth resistor (10), via which the second resistor (5) is connected to the base of the first transistor (2), and that the connection point of these two resistors (5,10) is connected via a second capacitor (11) to a reference potential.

9. A coupling stage as claimed in one of the claims 1 to 8, characterised in that the second resistor (5) is connected in series with a parallel oscillating circuit (14,15) which is tuned to the frequency of the signals which are to be transmitted and via which the second resistor (5) is connected to the base of the first transistor (2), and that the connection point of the second resistor (5) and parallel oscillating circuit (14,15) is connected to a reference potential via a second capacitor (11) which has a large capacitance.

10. A coupling stage as claimed in one of the claims 1 to 9, characterised in that a device which acts both as signal transmitter and as signal receiver is connected in place of the transmission line.

## Revendications

1. Etage de couplage pour coupler un appareil (1) de traitement de signaux à une ligne de transmission (17), comprenant le montage en série d'un premier transistor (2) et d'une source de courant (3) commandée, qui est raccordé à une source de tension d'alimentation, dans lequel le point de connexion du premier transistor (2) et de la source de courant (3) est relié à la ligne de transmission (17), dans lequel le premier transistor (2) est attaqué par les signaux de sortie de l'appareil (1) et dans lequel la source de courant (3) est branchée pendant chaque émission de l'appareil (1), caractérisé en ce qu'une borne à signaux (I/0) de l'appareil, qui agit comme entrée et sortie, est reliée à travers une première résistance (4) à la base du premier transistor (2), qu'une sortie de commande (S) de l'appareil (1), à laquelle est appliqué un signal (An) fixant le sens de transmission, est reliée à travers une deuxième résistance (5) à la base du premier transistor (2) et que la ligne de transmission (17) est reliée à travers une troisième résistance (6) à la borne à signaux (I/0) de l'appareil (1).

2. Etage selon la revendication 1, caractérisé en ce que la troisième résistance (6) est disposée entre le point de connexion du premier transistor (2) avec la source de courant et la base du premier transistor (2).

3. Etage selon la revendication 1 ou 2, caractérisé en ce que la sortie de commande (S) de l'appareil (1) est reliée à une entrée de commande de la source de courant (3).

4. Etage selon la revendication 3, caractérisé en ce que la source de courant (3) est constituée du montage en série d'un second transistor (3a) et d'une quatrième résistance (3b), que le second transistor (3a) présente le même sens de conduction que le premier transistor (2) et que la base du second transistor (3a) est reliée à la prise médiane d'un diviseur de tension formé de deux résistances (3c, 3d) dont l'une (3c) est reliée à la sortie de commande (S) de l'appareil (1).

5. Etage selon la revendication 1 ou 2, caractérisé en ce que la source de courant (3) est constituée du montage en série d'un second transistor (3a) et d'une quatrième résistance (3b), une sixième résistance (3e) étant branchée en parallèle avec ce montage en série et la base du second transistor (3a) étant reliée à la borne à signaux de l'appareil (1).

6. Etage selon la revendication 1 ou 2, caractérisé en ce que la source de courant (3) est constituée du montage en série d'une diode (3f) et d'une quatrième résistance (3b), une sixième résistance (3e) étant branchée en parallèle avec ce montage en série.

7. Etage selon la revendication 3 ou 4, caractérisé en ce que le premier transistor (2) est relié à travers une septième résistance (13) à la tension d'alimentation et que le point de connexion de la résistance (13) avec le premier transistor (2) est relié à travers un premier condensateur (12) à la base du second transistor (3a).

8. Etage selon une des revendications 1 à 6, caractérisé en ce que la deuxième résistance (5) est branchée en série avec une cinquième résistance (10), à travers de laquelle la deuxième résistance (5) est reliée à la base du premier transistor (2), et que le point de connexion de ces deux résistances (5, 10) est raccordé à travers un deuxième condensateur (11) à un potentiel de référence.

9. Etage selon une des revendications 1 à 8, caractérisé en ce que la deuxième résistance (5) est branchée en série avec un circuit oscillant parallèle (14, 15) qui est accordé sur la fréquence des signaux à transmettre et à travers lequel la deuxième résistance (5) est reliée à la base du premier transistor (2), et que le point de connexion de la deuxième résistance (5) et du circuit oscillant parallèle (14, 15) est raccordé à travers un second condensateur (11) de grande capacité à un potentiel de référence.

10. Etage selon une des revendications 1 à 9, caractérisé en ce qu'un appareil agissant à la fois comme émetteur et comme récepteur de signaux est raccordé à la place de la ligne de transmission.

FIG 1

FIG 2

FIG 3

FIG 5

FIG 4